# EUROPÄISCHE PATENTSCHRIFT

(11) **EP 2 312 955 B1**
(45) Veröffentlichungstag und Bekanntmachung des Hinweises auf die Patenterteilung: **28.10.2015**
(21) Anmeldenummer: 09775549.0
(22) Anmeldetag: 26.06.2009
(51) Int. Cl.: A23K 1/16, A23K 1/175, A23K 1/18, A23K 1/00, A23K 3/03

(54) **VERFAHREN ZUR BEHANDLUNG VON FUTTERSILAGE FÜR WIEDERKÄUER SOWIE FUTTERSILAGEZUSATZ**
METHOD FOR TREATING FOOD SILAGE FOR RUMINANTS AND FOOD SILAGE ADDITIVE
PROCÉDÉ DE TRAITEMENT DE FOURRAGE ENSILÉ DESTINÉ À DES RUMINANTS ET ADDITIF POUR FOURRAGE ENSILÉ

(30) Priorität: 21.07.2008 AT 39608 U
(43) Veröffentlichungstag der Anmeldung: 27.04.2011
(73) Patentinhaber: Erber Aktiengesellschaft, 3130 Herzogenburg (AT)
(72) Erfinder: BINDER, Eva Maria, A-3430 Tulln (AT); PASTEINER, Siegried, A-3100 St. Pölten (AT); ARAGON, Yunior Acosta, A-3100 St. Pölten (AT)
(74) Vertreter: Cunow, Gerda
(86) Internationale Anmeldenummer: PCT/AT2009/000256
(87) Internationale Veröffentlichungsnummer: WO 2010/017568

(56) Entgegenhaltungen:
- EP-A1- 1 673 983
- EP-A2- 1 630 226
- WO-A1-99/35240
- WO-A1-03/053161
- WO-A2-2006/053357
- DE-A1- 19 608 263

## Beschreibung

Die vorliegende Erfindung bezieht sich auf ein Verfahren zur Behandlung von Futtersilage für Wiederkäuer, bei welchem Silage mit einem Mikroorganismus versetzt wird, und die Mischung aus Futtersilage und Mikroorganismus für wenigstens 30 Tage in einem geschlossenen Behälter aufbewahrt wird, sowie auf einen Futtersilagezusatz für Wiederkäuer, enthaltend Silage aus Gras oder Heu, Getreide, Mais und/oder Luzerne sowie einen Mikroorganismus.

Futtersilage wird schon seit einer Vielzahl von Jahren insbesondere für die Fütterung von Wiederkäuern entweder in eigens dafür vorgesehenen Futtersilos oder auch in speziellen, luftdichten Silageballen hergestellt, da durch die Verfütterung als Silage einerseits die Haltbarkeit des Futters verbessert wird und andererseits Wiederkäuer mit dem nötigen, energiereichen Futter versorgt werden können.

Hiebei wird bei der Behandlung von agrarischen Rohstoffen zur Herstellung von Futtersilage der Rohstoff, insbesondere Gras, Mais oder dgl., mit Milchsäurebakterien versetzt, der sogenannten Ensilierung, welche ein altbekanntes Verfahren ist, um einerseits die Haltbarkeit derartiger Produkte zu erhöhen und andererseits auch die Eigenschaften der Rohstoffe zu verändern bzw. zu verbessern. Für die Herstellung von derartigen Silagen eignen sich sowohl Mais als auch Gräser, Hirse, Getreide mit oder ohne Körner sowie Leguminosen als Rohstoffe. Um Silagen herzustellen, werden häufig Silierungshilfsmittel, sogenannte Silagestarter, verwendet, wobei sowohl chemische Zusätze als auch mikrobielle Zusätze zum Einsatz gelangen.

In der WO 99/35240 sind ein Mikroorganismus, Verfahren zur Gewinnung desselben sowie ein Futtermittelzusatz, enthaltend diesen Mikroorganismus beschrieben. Der Mikroorganismus ist hiebei insbesondere zur Detoxifizierung von Trichothecenen geeignet, wobei ein entsprechender Futtermittelzusatz zusätzlich ein Trägermaterial, wie Aluminiumsilikate oder Kieselgure enthält.

Der WO 03/053161 ist ein Mikroorganismus zur biologischen Entgiftung von Mycotoxinen, nämlich Ochratoxinen und/oder Zearalenonen sowie Verfahren und Verwendung desselben entnehmbar, wobei die entsprechenden Mikroorganismen, wie anaerobe oder aerobe, detoxifizierende Bakterien und/oder Hefen die Phenylalaningruppe der Ochratoxine abspalten bzw. Zearalenone abbauen.

Die WO 2006/053357 offenbart weiterhin einen Mikroorganismus zur Entgiftung von Fumonisinen sowie eine Verwendung desselben, ein Verfahren zum Entgiften von Fumonisinen und einen Futtermittelzusatz enthaltend den entsprechenden Mikroorganismus. Bei einem derartigen Verfahren bzw. einem entsprechenden Futtermittelzusatz werden wenigstens zwei verschiedene Mikroorganismen eingesetzt, welche Fumonisine enzymatisch in einer ein- oder mehrstufigen Reaktion in deaminierte Metaboliten umwandeln.

Der EP 1 630 226 A ist ein Inhibitor für die Methanproduktion und eine Futtermittelzusammensetzung für Wiederkäuer entnehmbar, wobei hiefür Mikroben, welche eine Nitritreduktasewirksamkeit besitzen, eingesetzt werden und die Mikroben so modifiziert wurden, daß die intrazelluläre Nitritreduktaseaktivität verstärkt bzw. verbessert ist.

Der EP 0 880 323 B ist ein Verfahren zur Herstellung von Silage unter Beifügung von mikrobiellen Zusätzen zu entnehmen. Durch Zusatz von Mikroorganismen, welche die Charakteristika eines speziellen Mikroorganismus, nämlich Lactobacillus buchneri, NCIMB 40788, aufweisen, werden Silagen hergestellt, welche einen Sekundärmetaboliten zusätzlich zu den normalerweise in der Fermentation hergestellten Fettsäuren produzieren, welcher Metabolit die Eigenschaften besitzt, das Wachstum von verunreinigenden Organismen zu inhibieren.

Der Zusatz von Mikroorganismen gemäß der EP 0 880 323 B führt hiebei zu einer gewissen Inhibition von Mikroorganismen, wobei neben diesen positiven Effekten jedoch der in der Wiederkäuerhaltung insbesondere wichtige und gravierende Methanausstoß der Wiederkäuer durch ein derartiges Verfahren zur Herstellung von Silage in keiner Weise beeinflußt werden kann.

Die vorliegende Erfindung zielt nun darauf ab, ein Verfahren zur Herstellung von Silage bzw. einen Futtersilagezusatz zur Verfügung zu stellen, welche(r) neben der Reduktion von Mykotoxinen im Tierfutter insbesondere den Methanausstoß der Wiederkäuer absenken kann.

Zur Lösung dieser Aufgabe ist das erfindungsgemäße Verfahren zur Behandlung von Futtersilage für Wiederkäuer im wesentlichen dadurch gekennzeichnet, daß die Futtersilage mit wenigstens zwei Mikroorganismen gewählt aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 und Eubacterium DSM 11798 sowie einem Silikat mit großer, innerer Oberfläche versetzt wird. Dadurch, daß die Futtersilage mit wenigstens zwei Mikroorganismen aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 1416 und Eubacterium DSM 11798 sowie zusätzlich einer anorganischen Substanz mit großer, innerer Oberfläche, wie einem Silikat, versetzt wird, gelingt es einerseits, die schädlichen Mykotoxine im Futtermittel bzw. in der Silage drastisch zu reduzieren, und andererseits, neben den positiven Wirkungen, wie sie beispielsweise teilweise in der EP 0 880 323 B beschrieben sind, zusätzlich den Methanausstoß der Wiederkäuer drastisch zu reduzieren. Diese Reduktion ist insbesondere auch jener, welche beispielsweise mit verschiedenen, bekannten Futterzusätzen, die im Hinblick auf ihre Effektivität zur Reduktion des Methanausstoßes untersucht wurden, wie verschiedene Öle und Tannine, deutlich überlegen, so daß geschlossen werden kann, daß insbesondere durch Einsatz von wenigstens zwei Mikroorganismen und einem Silikat mit großer, innerer Oberfläche die schädlichen Mykotoxine soweit in der Futtersilage bzw. auch im Verdauungstrakt der Tiere abgebaut werden können, daß diese keinen bzw. einen verschwindenden Beitrag zur der Methanproduktion liefern können.

Durch Wahl der Bakterien bzw. Hefen aus der obengenannten Gruppe wird nicht nur die Fermentierbarkeit des Futters im Wiederkäuerpansen verbessert, sondern auch eine erhöhte aerobe Stabilität des Futters erzielt, der Energiegehalt des Futters verbessert und der negative Effekt von Mykotoxinen nahezu vollständig ausgeschlossen bzw. inhibiert. Durch das Ausschließen des negativen Effekts von Mykotoxinen wird nicht nur die Produktionsleistung der Tiere in bezug auf Milch und/oder Fleisch erhöht, sondern auch die Methanemission signifikant um wenigstens 15 % gegenüber mit bekannten Substanzen behandelter Silage abgesenkt.

Gemäß einer bevorzugten Weiterbildung der Erfindung wird das erfindungsgemäße Verfahren so geführt, daß als Mikroorganismen zwei Mikroorganismen aus der Gruppe der Hefen und/oder Bakterien, insbesondere jeweils ein heterofermentativer Mikroorganismus, ein homofermentativer Mikroorganismus und Silikat eingesetzt werden. Durch Zusatz von wenigstens einem heterofermentativen Mikroorganismus oder einem homofermentativen Mikroorganismus und einem anorganischen Material gelingt es, die Mykotoxine möglichst vollständig in der Silage und während der Verdauung im Verdauungstrakt der Tiere abzubauen, so daß neben der Tatsache, daß die Haltbarkeit der Produkte erhöht wird, und neben der bekannten Eigenschaft, daß die Eigenschaften der Rohstoffe verändert bzw. verbessert werden, insbesondere aufgrund der verbesserten Fermentierbarkeit des Futters im Wiederkäuerpansen ein positiver Einfluß auf die Methanemission erzielt werden kann.

Indem das erfindungsgemäße Verfahren so geführt wird, daß der Futtersilage jeweils gleiche Mengen von wenigstens einem Mikroorganismus aus der Gruppe der Bakterien und einem Mikroorganismus aus der Gruppe der Hefen zugesetzt werden, gelingt ein nahezu vollständiger Abbau der Mykotoxine in der so hergestellten Futtersilage bzw. im tierischen Verdauungstrakt, so daß die Produktionsleistung der mit einem Futter, welches gemäß einem derartigen Verfahren hergestellt ist, gefütterten Wiederkäuern signifikant verbessert wird.

Indem das Verfahren so geführt wird, daß das Silikat mit großer, innerer Oberfläche aus Aluminiumsilikaten, Kieselguren, Zeolithen und/oder Bentonit gewählt wird, können auch weitere Verunreinigungen, welche auf bzw. in dem Silagerohmaterial vorhanden sind, leicht und effizient durch das Silikat gebunden werden, so daß nicht nur die Mykotoxine, sondern auch andere für die Wiederkäuer gegebenenfalls schädliche Substanzen sicher und zuverlässig der Resorption im tierischen Organismus entzogen werden können.

Aluminiumsilikat sowie insbesondere säurebehandeltes oder granuliertes Aluminiumsilikat hat sich für derartige Einsatzzwecke als besonders günstig und als die Produktionsleistung der Tiere besonders deutlich steigernd erwiesen.

Die Erfindung zielt weiters auf einen Futtersilagezusatz ab, mit welchem der Methanausstoß bei Wiederkäuern abgesenkt werden kann.

Zur Lösung dieser Aufgabe ist der erfindungsgemäße Futtersilagezusatz im wesentlichen dadurch gekennzeichnet, daß der Futtersilagezusatz aus wenigstens zwei Mikroorganismen aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 und Eubacterium DSM 11798 und einem Silikat mit großer, innerer Oberfläche besteht. Indem der Futtersilagezusatz aus wenigstens zwei Mikroorganismen aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 und Eubacterium DSM 11798 und einem Silikat mit großer, innerer Oberfläche besteht, gelingt es die in dem Silagerohmaterial, wie Gräsern, Getreide, Mais, Luzernen und dgl., enthaltenen Mykotoxine nahezu vollständig unschädlich zu machen bzw. zu binden, wodurch nicht nur eine verbesserte Produktionsleistung der Wiederkäuer erzielt werden kann, sondern insbesondere der Methanausstoß der Wiederkäuer um wenigstens 15 % gegenüber herkömmlichen Silagen abgesenkt werden kann.

Dadurch, daß die zwei Mikroorganismen aus der Gruppe der Hefen und/oder Bakterien gewählt sind und insbesondere aus jeweils einem heterofermentierenden und einem homofermentierenden Mikroorganismus gewählt sind, gelingt es, die verschiedensten Mykotoxine, welche in dem Silagerohmaterial enthalten sind, gleichzeitig unschädlich zu machen, so daß die Methanbilanz der Tiere weiter verbessert werden kann.

Durch Auswahl von wenigstens zwei aus den speziellen Bakterien und/oder Hefen werden einerseits die in dem Futtermittel enthaltenen Mykotoxine nahezu vollständig abgebaut und gleichzeitig eine verbesserte Fermentierbarkeit des Futters erzielt, wodurch eine erhöhte aerobe Stabilität des Futters erzielt werden kann, was einerseits den Energiegehalt verbessert und andererseits die negativen Effekte der Mykotoxine nahezu vollständig hintanhält.

Indem die Erfindung dahingehend weitergebildet wird, daß der Futtersilagezusatz so ausgebildet ist, daß die Futtersilage jeweils wenigstens einen Mikroorganismus aus der Gruppe der Bakterien und einen Mikroorganismus aus der Gruppe der Hefen enthält, kann im wesentlichen das vollständige Spektrum von im Futtermittel möglicherweise enthaltenen Mykotoxinen gleichzeitig abgebaut bzw. immobilisiert werden, wodurch die Methanbilanz der Tiere weiter verbessert werden kann.

Indem in dem Futtersilagezusatz gemäß der vorliegenden Erfindung das Silikat mit großer, innerer Oberfläche aus Aluminiumsilikaten, Kieselguren, Zeolithen und/oder Bentonit gewählt ist, werden weitere möglicherweise in der Silage enthaltene, schädliche Komponenten sicher und zuverlässig immobilisiert bzw. gebunden, so daß eine weitere Absenkung von pathogenen Substanzen in der Futtersilage erzielt werden kann, was wiederum die Produktionsleistung der Tiere weiter verbessert. In diesem Zusammenhang hat sich insbesondere der Zusatz von Aluminiumsilikat, insbesondere säurebehandeltem, granuliertem Aluminiumsilikat, als besonders vorteilhaft erwiesen.

Die Erfindung wird nachfolgend anhand von Ausführungsbeispielen näher erläutert. In diesen zeigt:
Experiment 1 die Wirkung von mit dem Futtersilagezusatz gemäß der vorliegenden Erfindung versetzter Futtersilage in einem Versuch mit Pansensimulationstechnik,
Experiment 2 einen Fütterungsversuch an Kälbern,
Experiment 3 einen Fütterungsversuch an Schafen,
Experiment 4 einen Fütterungsversuch an Milchkühen,
Experiment 5 einen Fütterungsversuch an Kälbern und
Experiment 6 einen Fütterungsversuch an Jungrindern.

### Experiment 1

Zwei Futterformulierungen wurden mit einer Pansensimulationstechnik untersucht (Rusitec). Hierbei wurden Fermenter mit 900 ml Pansenflüssigkeit, gewonnen aus fistulierten Kühen, befüllt und mit 100 ml McDougall Puffer versetzt; im kontinuierlichen System wurden jeweils 500 ml Flüssigkeit pro Tag durch Puffer ausgetauscht, der Versuch selbst dauerte 10 Tage. Futter wurde täglich zugesetzt und inkubiert, wobei in der Testgruppe Futter verwendet wurde, das Ganzkornmaissilage, welche zu gleichen Teilen mit Lactobacillus kefiri DSM 19455 und Enterococcus faecium DSM 3530 sowie säurebehandeltem, granuliertem Aluminiumsilikat behandelt wurde, enthielt. Die Kontrollgruppen enthielten Futter mit herkömmlich behandelter Ganzkornmaissilage, eine davon mit einem chemischen Silagestarter behandelt, die andere mit einem mikrobiellen Silagestarter behandelt. Die Mykotoxinanalytik ergab eine Kontamination von 382 µg/kg Aflatoxin B1 und 2095 µg/kg Fumonsin B1 und B2. Die Methanproduktion war in der Gruppe mit Ganzkornsilage, welche gemäß dem erfindungsgemäßen Verfahren behandelt wurde, signifikant geringer (P < 0,05) im Vergleich zu den anderen Gruppen.

**Tabelle 1**

| Methanausstoß, in vitro Versuch | |
|---|---|
| | Methanausstoß [mmol/Tag] |
| Futter mit Ganzkornsilage, behandelt mit Lactobacillus kefiri DSM 19455, Enterococcus faecium DSM 3530 und säurebehandeltem, granuliertem Aluminiumsilikat | 3.34^{a} |
| Futter enthaltend Ganzkornsilage, die mit einen chemischen Zusatz behandelt worden war | 7.67^{b} |
| Futter enthaltend Ganzkornsilage, die mit einem mikrobiellen Zusatz behandelt worden war | 6.92^{b} |

### Experiment 2

Zwei Gruppen zu je drei Kälbern (Holstein) erhielten über einen Zeitraum von vier Wochen entweder Futterformulierung A, enthaltend Silage, welche mit Lactobacillus kefiri DSM 19455 und Eubacterium DSM 11798 sowie Trichosporon mucoides DSM 14156 und Bentonit behandelt wurde, oder Futterformulierung B, enthaltend Silage mit einem herkömmlichen mikrobiellen Siliermittel, bestehend aus Lactobacillus buchneri. Der Methanausstoß wurde in einer Respirationskammer in drei Meßintervallen zu je 22 h erhoben. Tiere, die Futterformulierung A erhielten, zeigten gegenüber den Tieren, die mit Ration B gefüttert wurden, einen reduzierten Methanausstoß von 16,7 %. Darüber hinausgehend waren auch die Leistungsdaten der Tiere in Gruppe A gegenüber Tieren der Gruppe B verbessert.

**Tabelle 2**

| Gewichtsentwicklung (kg) | | |
|---|---|---|
| | Versuchstag 1 | Versuchstag 28 |
| Gruppe A | 48,3 ± 1,2 | 66,7 ± 2,8 |
| Gruppe B | 48,8 ± 1,5 | 65,3 ± 3,2 |

### Experiment 3

Neun männliche, kastrierte Schafe wurden in drei homogene Gruppen zu je drei Tieren geteilt, wobei die Gruppen jeweils eine der drei verschiedenen Futterformulierungen erhielten: (a) Futter, Ganzkornmaissilage, welche gemäß der vorliegenden Erfindung mit Lactobacillus brevis DSM 19456, Trichosporon spec. nov. DSM 14153 und säurebehandeltem, granuliertem Aluminiumsilikat behandelt wurde; (b) Futter mit Ganzkornmaissilage mit einem chemischen Siliermittel behandelt; (c) Futter mit Ganzkornmaissilage mit einem mikrobiellen Siliermittel behandelt; die Mykotoxinkonzentration des Futters betrug 532 µg/kg Aflatoxin, 1887 µg/kg Fumonisin B1. Die Tiere wurden in einer Respirationskammer gehalten und in zwei 24-stündigen Meßperioden der Gasaustausch gemessen. Der Methanausstoß konnte in der Gruppe, die erfindungsgemäß behandeltes Futter erhielt um 15,2 % gegenüber der Gruppe mit chemisch behandelter Silage und 13,1 % gegenüber der Gruppe mit mikrobiologisch behandelter Silage verringert werden.

### Experiment 4

Drei Gruppen mit jeweils sechs Milchkühen (Rasse: Holstein-Friesian) erhielten über einen Zeitraum von vierzehn Tagen jeweils eine von drei verschiedenen Futtermischungen: (a) Futter, mit Lactobacillus kefiri DSM 19455, Enterococcus faecium DSM 3530, Trichosporon mucoides DSM 14156 und säurebehandeltem, granuliertem Aluminiumsilikat behandelte Maissilage; (b) Futter mit Maissilage mit einem chemischen Siliermittel behandelt; (c) Futter mit Maissilage mit einem mikrobiellen Siliermittel behandelt. Der Aflatoxin B1 Gehalt der Maissilage betrug 194 mg/kg. Der Methanausstoß von jeweils zwei Tieren aus jeder Gruppe wurde in einer Respirationskammer über einen Zeitraum von 24 h ermittelt. Bei allen Tieren wurde zusätzlich die Milchleistung erhoben sowie der Transfer von Aflatoxin B1 zu Aflatoxin M1 in die Milch analysiert. Die Gruppe, die mit erfindungsgemäß behandelter Silage gefüttert wurde, zeigte einen reduzierten Methanausstoß (minus 12,1 % gegenüber von (b), minus 11,4 % gegenüber (c), bei verbesserter Milchleistung ((a): 31,5 ± 6,1 kg/Tag; (b): 30,6 ± 6,9 kg/Tag; (c): 30,6 ± 6,5 kg/Tag) und reduziertem Aflatoxin carry over.

**Tabelle 3**

| Aflatoxin M1 Gehalte (ng/kg) in der Milch | | | |
|---|---|---|---|
| | Gruppe (a) | Gruppe (b) | Gruppe (c) |
| Versuchstag 4 | 12 | 124 | 112 |
| Versuchstag 7 | 11 | 157 | 136 |
| Versuchstag 11 | 12 | 162 | 151 |
| Versuchstag 14 | 8 | 181 | 143 |

### Experiment 5

Zwei Gruppen zu jeweils 12 Kälbern (Simmental) im Alter von ungefähr 5 Wochen erhielten zwei verschiedene Futterformulierungen über einen Zeitraum von 12 Wochen: (a) Futter, Maissilage, welche mit Enterococcus faecium DSM 3530, Trichosporon dulcitum DSM 14162 und einem natürlichen Zeolith behandelt wurde; (b) Futter mit Maissilage mit einem mikrobiellen Siliermittel (Lactobacillus kefiri) behandelt. Der Aflatoxingehalt der Silage betrug 112 µg/kg. Bei jeweils einem Tier aus jeder Gruppe wurde der Methanausstoß gemessen. Gruppe (a) zeigte gegenüber Gruppe (b) einen verringerten Ausstoß von 28 % (32,3 1/Tag in Gruppe (a), 44,8 1/Tag in Gruppe (b)), verbesserte Gewichtsentwicklung bei geringerer Futterverwertung ((a): 1,65; (b): 1,70).

**Tabelle 4**

| Gewichtsentwicklung (Durchschnittsgewichte in kg) | | |
|---|---|---|
| | Versuchsstart | Versuchsende (12 Wochen) |
| Gruppe (a) | 90,3 | 167,9 |
| Gruppe (b) | 89,8 | 160,4 |

### Experiment 6

Sechzig männliche Rinder (Simmental) im Alter von ca. 6 Monaten wurden in zwei Gruppen ä 30 Tieren geteilt und erhielten zur herkömmlichen Standarddiät einen Futterzusatz verabreicht, bestehend aus einem homofermentativen Mikroorganismus, L. plantarum DSM 19457 sowie einem heterofermentativen Mikroorganismus L. brevis DSM 19456 auf Montmorillonit in der Versuchsgruppe, sowie und in der Kontrollgruppe als Zusatz nur Montmorillonit, in der Dosierung von jeweils 30 g Futterzusatz pro Tier und Tag. Im Futterkonzentrat wurden Tritikale und Mais durch mit ca. 12 ppm Deoxynivalenol kontaminierten Mais ersetzt, so daß die Deoxynivalenolkonzentration im Futterkonzentrat ca. 4 ppm betrug. Bei jeweils einem Tier pro Gruppe wurde der Methanausstoß gemessen: das Tier der Versuchsgruppe zeigte gegenüber dem Tier aus der Kontrollgruppe einen um ca. 15 % verringerten CH₄ Ausstoß, bei einer durchschnittlichen Verbesserung der Gewichtszunahme um 6,96 %.

**Tabelle 5**

| | Kontrolle | | Versuchsgruppe |
|---|---|---|---|
| Dosierung (g Zusatz pro Tier und Tag | 30 | | 30 |
| Anzahl der Tiere | 30 | | 30 |
| Startgewicht (kg) | 160,92 | | 160,68 |
| Endgewicht (kg) | 348,47 | | 362,27 |
| Durchschnittliche Gewichtszunahme pro Tier (g) | 187,55 | | 201,59 |
| Ausfälle | --- | | --- |
| Veterinärmedizinische Behandlungen | --- | | --- |

## Patentansprüche

1. Verfahren zur Behandlung von Futtersilage für Wiederkäuer, bei welchem Silage mit einem Mikroorganismus versetzt wird, und die Mischung aus Futtersilage und Mikroorganismus für wenigstens 30 Tage in einem geschlossenen Behälter aufbewahrt wird, **dadurch gekennzeichnet, daß** die Futtersilage mit wenigstens zwei Mikroorganismen gewählt aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 und Eubacterium DSM 11798 sowie einem Silikat mit großer, innerer Oberfläche versetzt wird.

2. Verfahren nach Anspruch 1, **dadurch gekennzeichnet, daß** als Mikroorganismen zwei Mikroorganismen aus der Gruppe der Hefen und/oder Bakterien, insbesondere jeweils ein heterofermentativer Mikroorganismus, ein homofermentativer Mikroorganismus, und ein Silikat eingesetzt werden.

3. Verfahren nach Anspruch 1 oder 2, **dadurch gekennzeichnet, daß** der Futtersilage jeweils wenigstens ein Mikroorganismus aus der Gruppe der Bakterien und ein Mikroorganismus aus der Gruppe der Hefen zugesetzt werden.

4. Verfahren nach Anspruch 1, 2 oder 3, **dadurch gekennzeichnet, daß** das Silikat mit großer, innerer Oberfläche aus Aluminiumsilikaten, Kieselguren, Zeolithen und/oder Bentonit gewählt wird.

5. Verfahren nach einem der Ansprüche 1 bis 4, **dadurch gekennzeichnet, daß** als Silikat mit großer, innerer Oberfläche Aluminiumsilikat, insbesondere säurebehandeltes, granuliertes Aluminiumsilikat, eingesetzt wird.

6. Futtersilagezusatz für Wiederkäuer, enthaltend Silage aus Gras, Getreide, Mais und/oder Luzerne sowie einen Mikroorganismus, **dadurch gekennzeichnet, daß** der Futtersilagezusatz aus wenigstens zwei Mikroorganismen gewählt aus der Gruppe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 und Eubacterium DSM 11798 und einem Silikat mit großer, innerer Oberfläche besteht.

7. Futtersilagezusatz nach Anspruch 6, **dadurch gekennzeichnet, daß** die zwei Mikroorganismen aus der Gruppe der Hefen und/oder Bakterien gewählt sind und insbesondere aus jeweils einem heterofermentierenden und einem homofermentierenden Mikroorganismus gewählt sind.

8. Futtersilagezusatz nach Anspruch 6 oder 7, **dadurch gekennzeichnet, daß** die Futtersilage jeweils gleiche Mengen von wenigstens einem Mikroorganismus aus der Gruppe der Bakterien und einem Mikroorganismus aus der Gruppe der Hefen enthält.

9. Futtersilagezusatz nach ein Ansprich 6, 7 oder 8, **dadurch gekennzeichnet, daß** das Silikat mit großer, innerer Oberfläche aus Aluminiumsilikaten, Kieselguren, Zeolithen und/oder Bentonit gewählt ist.

10. Futtersilagezusatz nach einem der Ansprüche 6 bis 9, **dadurch gekennzeichnet, daß** das Silikat mit großer, innerer Oberfläche aus Aluminiumsilikat, insbesondere säurebehandeltem, granuliertem Aluminiumsilikat, besteht.

## Claims

1. A method for treating feed silage for ruminants, by which silage is mixed with a microorganism and the mixture of feed silage and microorganism is stored in a closed container for at least 30 days, **characterized in that** the feed silage is mixed with at least two microorganisms selected from the group consisting of Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 and Eubacterium DSM 11798, as well as a siliate having a large internal surface area.

2. A method according to claim 1, **characterized in that** two microorganisms from the group of yeasts and/or bacteria, in particular each a heterofermentative microorganism and a homofermentative microorganism are used as microorganisms, and a silicate.

3. A method according to claim 1 or 2, **characterized in that** the feed silage is each supplemented with at least one microorganism from the group of bacteria and a microorganism from the group of yeasts.

4. A method according to claim 1, 2 or 3, **characterized in that** the silicate having a large internal surface area is selected from aluminium silicates, diatomaceous earths, zeolites and/or bentonite.

5. A method according to any one of claims 1 to 4, **characterized in that** aluminium silicate, in particular acid-treated granulated aluminium silicate, is used as said silicate having a large internal surface area.

6. A feed silage additive for ruminants, containing silage of grass, cereals, maize and/or lucernes as well as a microorganism, **characterized in that** the feed silage additive is comprised of at least two microorganisms selected from the group consisting of Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 and Eubacterium DSM 11798, and a inorganic silicate having a large internal surface area.

7. A feed silage additive according to claim 6, **characterized in that** the two microorganisms are selected from the group of yeasts and/or bacteria and, in particular, from each a heterofermentative microorganism and a homofermentative microorganism.

8. A feed silage additive according to claim 6 or 7, **characterized in that** the feed silage respectively contains equal amounts of at least one microorganism from the group of bacteria and one microorganism from the group of yeasts.

9. A feed silage additive according to claim 6, 7 or 8, **characterized in that** the silicate having a large internal surface area is selected from aluminium silicates, diatomaceous earths, zeolites and/or bentonite.

10. A feed silage additive according to any one of claims 6 to 9, **characterized in that** the silicate having a large internal surface area is comprised of aluminium silicate, in particular acid-treated granulated aluminium silicate.

## Revendications

1. Procédé servant à traiter du fourrage ensilé pour des ruminants, dans lequel un ensilage est mélangé à un micro-organisme, et le mélange de fourrage ensilé et micro-organisme est conservé pendant au moins 30 jours dans un contenant fermé, **caractérisé en ce que** le fourrage ensilé est mélangé à au moins deux micro-organismes choisis parmi le groupe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 et Eubacterium DSM 11798, ainsi qu'à un silicate ayant une grande surface interne.

2. Procédé selon la revendication 1, **caractérisé en ce qu'**il est utilisé en tant que micro-organismes deux micro-organismes issus du groupe des levures et/ou bactéries, en particulier respectivement un micro-organisme hétérofermentaire, un micro-organisme homofermentaire, et un silicate.

3. Procédé selon la revendication 1 ou 2, **caractérisé en ce qu'**il est ajouté au fourrage ensilé respectivement au moins un micro-organisme issu du groupe des bactéries et un micro-organisme issu du groupe des levures.

4. Procédé selon la revendication 1, 2, ou 3, **caractérisé en ce que** le silicate ayant une grande surface interne est choisi parmi les silicates d'aluminium, les terres de diatomées, les zéolithes et/ou la bentonite.

5. Procédé selon l'une quelconque des revendications 1 à 4, **caractérisé en ce qu'**il est utilisé en tant que silicate ayant une grande surface interne un silicate d'aluminium, en particulier un silicate d'aluminium traité à l'acide, granulé.

6. Additif de fourrage ensilé pour ruminants, contenant un ensilage composé d'herbe, de céréales, de maïs et/ou de luzerne ainsi qu'un micro-organisme, **caractérisé en ce que** l'additif de fourrage ensilé est constitué d'au moins deux micro-organismes choisis parmi le groupe Enterococcus faecium DSM 3530, Lactobacillus brevis DSM 19456, Lactobacillus plantarum DSM 19457, Lactobacillus kefiri DSM 19455, Trichosporon spec. nov. DSM 14153, Trichosporon mucoides DSM 14156, Trichosporon dulcitum DSM 14162 et Eubacterium DSM 11798, et un silicate ayant une grande surface interne.

7. Additif de fourrage ensilé selon la revendication 6, **caractérisé en ce que** les deux micro-organismes sont choisis parmi le groupe des levures et/ou des bactéries et sont choisis en particulier parmi respectivement un micro-organisme hétérofermentaire et un micro-organisme homofermentaire.

8. Additif de fourrage ensilé selon la revendication 6 ou 7, **caractérisé en ce que** le fourrage ensilé contient respectivement des quantités identiques d'au moins un micro-organisme issu du groupe des bactéries et un micro-organisme issu du groupe des levures.

9. Additif de fourrage ensilé selon l'une quelconque des revendications 6, 7, ou 8, **caractérisé en ce que** le silicate ayant une grande surface interne est choisi parmi les silicates d'aluminium, les terres de diatomées, les zéolithes et/ou la bentonite.

10. Additif de fourrage ensilé selon l'une quelconque des revendications 6 à 9, **caractérisé en ce que** le silicate ayant une grande surface interne est constitué de silicate d'aluminium, en particulier d'un silicate d'aluminium traité à l'acide, granulé.
